# EUROPÄISCHE PATENTSCHRIFT

(11) **EP 0 680 839 B1**
(45) Veröffentlichungstag und Bekanntmachung des Hinweises auf die Patenterteilung: **20.01.1999**
(21) Anmeldenummer: 95105981.5
(22) Anmeldetag: 21.04.1995
(51) Int. Cl.: B60H 1/00, B60Q 1/05

(54) **Vorrichtung zum Betätigen einer Klappe**
Device for actuating of a flap
Dispositif pour actionner une palette

(30) Priorität: 03.05.1994 DE 44154593
(43) Veröffentlichungstag der Anmeldung: 08.11.1995
(73) Patentinhaber: VALEO GmbH Klimasysteme, 70597 Stuttgart (DE)
(72) Erfinder: Knauer, Gregor, D-38550 Isenbüttel (DE)
(74) Vertreter: COHAUSZ HANNIG DAWIDOWICZ & PARTNER

(56) Entgegenhaltungen:
- EP-A- 0 301 379
- DE-A- 1 954 619
- FR-A- 2 080 132
- FR-A- 2 475 468

## Beschreibung

Die Erfindung betrifft eine Vorrichtung zum Betätigen einer zwischen zwei Endstellungen verschwenkbaren Klappe oder eines zwischen zwei Endstellungen verschwenkbaren Filters oder Scheinwerfers, insbesondere für eine Luftheizung oder Klimaanlage, insbesondere eines Kraftfahrzeuges.

Es ist bekannt, eine zwischen zwei Endstellungen verschwenkbare Klappe einer Kraftfahrzeug-Klimaanlage pneumatisch durch einen Kolben oder eine Membran zu betätigen. Hierfür ist es erforderlich, einen Luftunterdruck oder -überdruck zu erzeugen. Ferner führt das Schließen und Öffnen einer pneumatisch bewegten Klappe zu Geräuschen. Auch erfordert es bei hoher Kraftfahrzeuggeschwindigkeit eine erhebliche Kraft, um eine Lufteintrittsklappe gegen den Druck des Fahrzeugwindes in der geschlossenen Stellung zu halten. Hierzu sind pneumatische Antriebe weniger geeignet.

Weiterhin ist aus der EP 0 267 101 eine Vorrichtung mit zwei koordiniert gesteuerten Regelklappen bekannt, die zur Regelung insbesondere eines kalten und eines warmen Luftstromes eingesetzt wird. Diese Vorrichtung kann z.B. für die Innenraumheizung eines Fahrzeuges benutzt werden. Entsprechend der Bewegung eines Steuerelements werden bei dieser Vorrichtung die beiden Regelklappen derart angesteuert, daß in einem ersten Teil der Bewegung die erste Klappe geschlossen bleibt, während die zweite Klappe geöffnet wird und in einen zweiten Teil der Bewegung die erste Klappe geöffnet wird und die zweite Klappe in ihrem geöffneten Zustand verbleibt.

Aufgabe der Erfindung ist es, eine Vorrichtung der eingangs genannten Art zu schaffen, die bei einfacher Konstruktion, hoher Funktionstüchtigkeit und kleiner Bauweise ein sicheres Schließen der Klappe erreicht, die Klappe in der Offen- und Geschlossen-Stellung sicher festhält und nur minimale Geräusche erzeugt.

Diese Aufgabe wird erfindungsgemäß gelöst durch eine Vorrichtung mit einer Kurbel, die mit ihrem äußeren Ende eine Schwing antreibt, die an einer Welle fest ist, durch die eine Klappe betätigbar ist und mit einer zweiten Kurbel an der Welle der ersten Kurbel, durch deren äußeres Ende eine zweite Klappe betätigbar ist, wobei die Kurbeln elektromotorisch, stets in derselben Drehrichtung angetrieben werden, und wobei die Kurbeln und die Schwingen außerhalb des Gehäuses liegen, das den elektromotorischen Antrieb eines Getriebes aufnimmt und daß in beiden Endstellungen der Schwinge (7) die Kurbel (4) mit der Schwinge (7) einen Winkel (α) von 80 bis 100 Grad, insbesondere von 85 bis 95 Grad bildet.

Eine solche Vorrichtung kommt mit wenigen Bauteilen aus und erzeugt in beiden Endstellungen der Schwinge eine Selbsthemmung der Schwinge durch die Kurbel. Hierdurch wird auch das Untersetzungsgetriebe im Motor beim Stillstand nicht belastet. Ein Nachlaufen der Kurbel oder ein zu frühes Stillstehen der Kurbel im Bereich einer der beiden Endstellungen der Schwinge ist ohne Belang, da in diesen Bereichen Kurbelbewegungen um einige Grad keine oder nur minimale Bewegungen der Schwinge erzeugen. Hierdurch entsteht auch ein sanftes Schließen und Öffnen der Klappe im Bereich dieser spiel freien Endstellungen der Schwinge. Hohe Stellkräfte können im Bereich des Schließens der Klappe erzeugt werden. Auch sind die Toleranzen bei einem solchen Getriebe besser handhabbar; Kleine Toleranzkette. Ein Einstellen ist nicht erforderlich. Auch bildet die Vorrichtung eine kompakte, leicht befestigbare Baueinheit. Es sind auch Zwischenstationen anfahrbar.
Besonders vorteilhaft ist es, wenn das Gleitstück in oder an der ersten Schwinge in einer gebogenen Bahn geführt ist. Hierdurch kann die zweite Klappe über einen bestimmten Bereich verstellt werden, ohne die erste Klappe zu verstellen. Hierbei kann das Langloch in der ersten Schwinge bogenförmig sein. Weitere vorteilhafte Ausgestaltungen sind in den übrigen Unteransprüchen aufgeführt.

Ein Ausführungsbeispiel der Erfindung ist in den Zeichnungen dargestellt und wird im folgenden näher beschrieben.

Es zeigen:

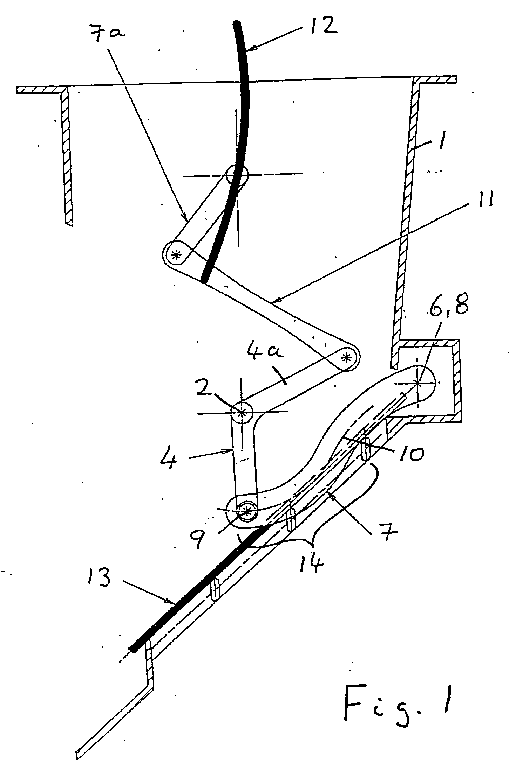

- Figur 1:: Einen Schnitt durch die Vorrichtung mit geschlossener Frischluftklappe und geöffneter Staudruckklappe.

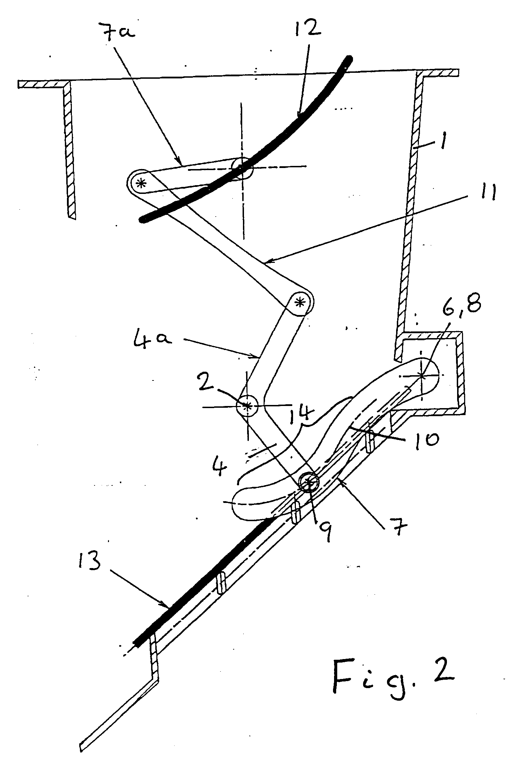

- Figur 2:: Die Vorrichtung mit geschlossener Frischluftklappe und halbgeöffneter Staudruckklappe und

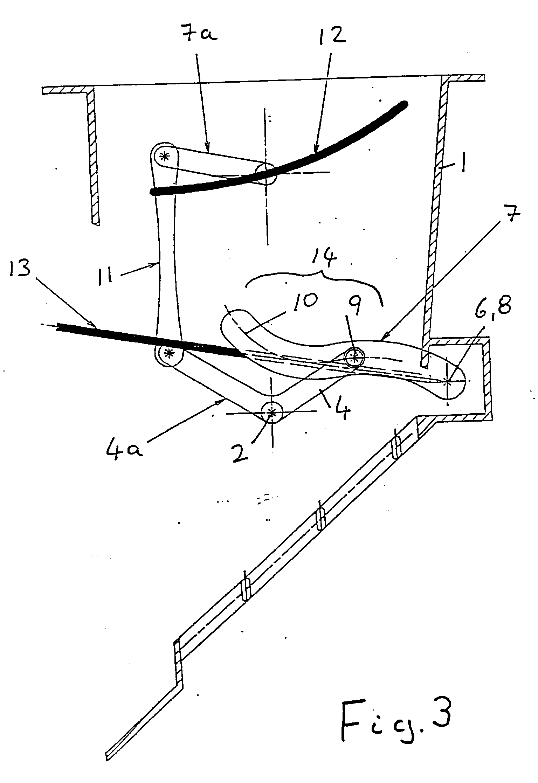

- Figur 3:: die Vorrichtung mit geöffneter Frischluftklappe und halbgeöffneter Staudruckklappe.

In einem Gehäuse 1 ist ein nichtdargestellter Elektromotor befestigt, der über ein Untersetzungsgetriebe, insbesondere mit einem auf der Motorenwelle befestigten Schneckenrad und mehreren Zahnrädern eine Getriebeabtriebswelle 2 antreibt, die durch eine Gehäuseseitenfläche 3 nach außen geführt ist und mit ihrem Ende eine Kurbel 4 trägt. Das Gehäuse 1 ist symmetrisch zu einer Gehäuselängsachse 5 geformt, die die Achse der Welle 2 schneidet.

In einem Abstand zur Welle 2 ist am Gehäuse 1 eine Anlenkstelle 6 einer Schwinge 7 befestigt, die um diese Anlenkstelle zwischen zwei Endstellungen hin- und herschwenkbar ist. Hierbei überstreicht die Schwinge 7 einen Winkel (α), der dem Winkel entspricht, um den die zu betätigende Klappe einer Kraftfahrzeugluftheizung oder Kraftfahrzeugklimaanlage von einer Offen-Stellung in eine Geschlossen-Stellung hin- und herschwenkbar ist. Hierbei ist an dem einen Ende der Schwinge 7 eine Welle 8 befestigt, die durch die Schwinge 7 verdrehbar ist und an der die Klappe angeschlossen ist. Die Achse der Anlenkstelle 6 schneidet die Achse 5 und liegt parallel zur Achse der Welle 2.

Das freie Ende der Kurbel 4 trägt einen Gleitstift 9, der in einem Langloch 10 der Schwinge 7 verschieblich einliegt. Hierbei ist das Langloch 10 in Längsrichtung der Schwinge 7, insbesondere auf deren Längsachse angeordnet.

Die Kurbel 4 wird durch den elektromotorischen Antrieb stets in derselben Drehrichtung bewegt, wobei der Antrieb so gesteuert ist, daß die Kurbel in zwei Stellungen stehen bleibt, bei denen die Kurbel jeweils einen Winkel (β) mit der Schwinge 7 bildet, der gleich oder nahe 90 Grad ist. In beiden Endstellungen der Schwinge 7 (Geschlossen-Stellung oder Offen-Stellung der Klappe) steht damit die Kurbel 4 etwa rechtwinklig zur Längsachse der Schwinge 7 bzw. des Langlochs 10, so daß in diesen beiden Endstellungen ein Betätigen der Kurbel 4 nur zu sehr geringen Bewegungen der Schwinge 7 führt. Damit ist eine nicht sehr exakte Haltstellung der Kurbel in beiden Haltepositionen ohne Auswirkungen auf die Offen- oder Geschlossen-Stellung der Klappe. Die Kurbel kann also ein wenig nachlaufen oder etwas zu früh stehenbleiben, ohne die Funktion der Vorrichtung zu beeinträchtigen.

In diesen zwei Haltstellungen der Kurbel blockiert darüberhinaus die Kurbel die Schwinge 7, d.h. ein auf die Schwinge 7 in den zwei Haltstellungen ausgeübtes Moment durch die Klappe kann nicht zu einem Verdrehen der Kurbel 4 führen, so daß in diesen beiden Stellungen eine Selbsthemmung erreicht ist. Damit wird in beiden Endstellungen der Klappe diese sicher festgehalten.

Damit die Kurbel 4 stets in denselben zwei Drehstellungen stehenbleibt, weist der elektromotorische Antrieb eine nicht dargestellte elektrische Kontaktsteuerung auf, die den Elektromotor ein- und ausschaltet.

Das außen am Gehäuse 1 gelagerte Getriebe aus Kurbel 4 und Schwinge 7 kann unterschiedliche Formen, Konstruktionen und Dimensionen aufweisen. So kann beispielsweise statt eines Gleitstiftes 9 ein Gleitstück der Kurbel 4 an der Außenseite der Schwinge 7 entlanggleiten. Auch kann die Kurbel 4 unterschiedliche Längen aufweisen, wodurch der Schwenkwinkel (β) der Schwinge 7 in seiner Größe veränderbar ist, so daß die Vorrichtung an unterschiedliche Klappenschwenkwinkel leicht angepaßt werden kann.

An der Kurbel 4 ist eine zweite Kurbel 4a angeformt, so daß beide eine Doppelkurbel in Form eines zweiarmigen Kniehebels bilden, dessen zwei Arme miteinander einen stumpfen Winkel bilden.

Am äußeren Ende der zweiten Kurbel 4a ist eine Übertragungsstange 11 angelenkt, deren anderes Ende an einer zweiten Schwinge 7a angelenkt ist, die an der Welle einer Klappe, insbesondere einer Staudruckklappe 12 einer Kraftfahrzeugluftheizung oder einer Kraftfahrzeug-Klimaanlage befestigt ist, um diese zu verstellen.

Damit über einen bestimmten Drehstellbereich die Kurbel 4a zwar die Klappe 12, aber die Kurbel 4 nicht die Klappe (Frischluftklappe) 13 verstellt, ist der Schlitz bzw. das Langloch 10 in der Schwinge 7 in einem ersten Bereich 14 teilkreisförmig ausgeführt, wobei der Mittelpunkt dieses Teilkreises die Achse der Kurbel 4 ist. Erst wenn der Gleitstift 9 außerhalb des Bereichs 14 gelangt, kann die Kurbel 4 die Schwinge 7 und damit die Klappe 13 verstellen.

Diese Koppelkurbel läuft vorzugsweise stets nur in einer Drehrichtung um. Für zwei Funktionen besteht nur ein Stellmotor. Dies bedeutet eine erhebliche Kostenreduzierung. In der Umluftstellung ist der Hebel 1 aufgrund der Kinematikstellung blockiert. Beim Übergang von der Frischluftstellung in die Umluftstellung ist die Staudruckklappe geschlossen (Entlastung der Kinematik für die Frischluft/Umluftklappe).

Die Schwinge 7 ist gegenüber der Welle 8 der Klappe verschieblich gelagert und drehverstellt beim Verschieben dei Welle, wobei die Welle 8 ein Gleitstück aufweist, das in oder an der Schwinge 7 gleitet.

Die Steckerbuchse ist symmetrisch mittig zur Gehäuseachse auf der der Welle abgewandten Seite angeordnet.

Das außen angeordnete Getriebe liegt zwischen Vorrichtungsgehäuse und dem Gehäuse der Luftklappe.

An beiden einander gegenüberliegenden Seiten des Gehäuses ist je ein äußeres Getriebe mit Kurbel und Schwinge angordnet.

Beide Stellmotorenausführungen bilden ein Baukastensystem. Die Stellmotoren unterscheiden sich durch die zwei Hebel und die integrierte Steuerung. Sie bleiben jedoch in ihren äußeren Abmaßen, dem Motorgehäuse und im Befestigungskonzept gleich. Daraus ergibt sich eine einfache Steuerung der Produktion und der Montage der Stellmotoren.

Wenn im gesamten Text von einer "Klappe" gesprochen wird, so kann dies auch eine andere Art von Stellglied von Schließvorrichtungen oder Ventilen sein. Ferner kann hierdurch auch ein Filter oder ein Scheinwerfer verstellt werden.

## Patentansprüche

1. Vorrichtung zum Betätigen einer zwischen zwei Endstellungen verschwenkbaren Klappe oder eines zwischen zwei Endstellungen verschwenkbaren Filters oder Scheinwerfers, insbesondere für eine Luftheizung oder Klimaanlage, insbesondere eines Kraftfahrzeuges,mit einer Kurbel (4), die mit ihrem äußeren Ende eine Schwinge (7) antreibt, die an einer Welle (8) fest ist, durch die eine Klappe betätigbar ist und mit einer zweiten Kurbel (4a) an der Welle (8) der ersten Kurbel (4), durch deren äußeres Ende eine zweite Klappe (12) betätigbar ist, **dadurch gekennzeichnet,** daß die Kurbeln (4, 4a) elektromotorisch, stets in derselben Drehrichtung, angetrieben sind und daß die Kurbeln (4, 4a) und die Schwingen (7, 7a) außerhalb des Gehäuses (1) liegen, das den elektromotorischen Antrieb einschließlich eines Getriebes aufnimmt und daß in beiden Endstellungen der Schwinge (7) die Kurbel (4) mit der Schwinge (7) einen Winkel (α) von 80 bis 100 Grad, insbesondere von 85 bis 95 Grad bildet.

2. Vorrichtung nach Anspruch 1, **dadurch gekennzeichnet,** daß an der Welle der zweiten Klappe eine zweite Schwinge (7a) befestigt ist, an der das äußere Ende der zweiten Kurbel direkt oder über ein Übertragungsteil angelenkt ist.

3. Vorrichtung nach Anspruch 1 oder 2, **dadurch gekennzeichnet,** daß das Gleitstück (9) in oder an der ersten Schwinge in einer gebogenen Bahn geführt ist.

4. Vorrichtung nach Anspruch 2 **dadurch gekennzeichnet,** daß das Langloch (10) in der ersten Schwinge (7) bogenförmig ist.

5. Vorrichtung nach einem der vorhergehenden Ansprüche 2 bis 3, **dadurch gekennzeichnet**, daß die zweite Kurbel (4a) mit der ersten Kurbel (4) einen stumpfen Winkel bildet.

6. Vorrichtung nach einem der vorhergehenden Ansprüche 2 bis 4, **dadurch gekennzeichnet**, daß die erste und zweite Kurbel zusammen einen doppelarmigen abgebogenen Hebel als Doppelkurbel bilden.

7. Vorrichtung nach einem der vorherigen Ansprüche, **dadurch gekennzeichnet,** daß die zweite Klappe eine Staudruckklappe ist.

8. Vorrichtung nach einem der vorherigen Ansprüche, **dadurch gekennzeichnet,** daß das äußere Ende der Kurbel (4) mit einem Gleitstück (9) an der Schwinge (7) in Schwingenlängsrichtung verschieblich befestigt ist.

9. Vorrichtung nach einem der vorherigen Ansprüche, **dadurch gekennzeichnet,** daß das stiftförmige Gleitstück (9) in einem Schwingen-Langloch (10) geführt ist, das in Schwingenlängsrichtung angeordnet ist.

10. Vorrichtung nach einem der vorigen Ansprüche, **dadurch gekennzeichnet,** daß die Achsen von Schwingen (7, 7a) und Kurbeln (4, 4a) zueinander parallel sind.

11. Vorrichtung nach einem der vorigen Ansprüche, **dadurch gekennzeichnet,** daß die Schwinge (7) durch die Kurbel (4) zwischen zwei Endstellungen hin- und herschwenkbar ist, wobei in der ersten Endstellung die Klappe geschlossen und in der zweiten Endstellung die Klappe geöffnet ist.

12. Vorrichtung nach einem der vorherigen Ansprüche, **dadurch gekennzeichnet,** daß der Schwenkwinkel (β) der Schwinge (7) zwischen beiden Endstellungen 45 bis 100 Grad, insbesondere 50 bis 90 Grad beträgt.

13. Vorrichtung nach einem der vorigen Ansprüche, **dadurch gekennzeichnet,** daß die Schwingen (7, 7a) und die Kurbeln (4, 4a) außen am Gehäuse angelenkt sind.

14. Vorrichtung nach einem der vorigen Ansprüche, **dadurch gekennzeichnet,** daß das Gehäuse (1) symmetrisch zu einer Gehäuselängsachse (5) ist, die die Drehachse von Schwinge (7) und Kurbel (4) schneidet.

15. Vorrichtung nach einem der vorherigen Ansprüche, **dadurch gekennzeichnet,** daß die Schwinge mit einer Frischluftklappe verbunden ist.

16. Vorrichtung nach einem der vorherigen Ansprüche, **dadurch gekennzeichnet,** daß die Schwinge (7) gegenüber der Welle (8) der Klappe verschieblich gelagert ist und beim Verschieben die Welle drehverstellt, wobei die Welle (8) ein Gleitstück aufweist, das in oder an der Schwinge (7) gleitet.

17. Vorrichtung nach einem der vorherigen Ansprüche, **dadurch gekennzeichnet,** daß die Steckerbuchse symmetrisch mittig zur Gehäuseachse auf der der Welle abgewandten Seite angeordnet ist.

18. Vorrichtung nach einem der vorherigen Ansprüche, **dadurch gekennzeichnet,** daß das außen angeordnete Getriebe zwischen Vorrichtungsgehäuse und dem Gehäuse der Luftklappe liegt.

19. Vorrichtung nach einem der vorherigen Ansprüche, **dadurch gekennzeichnet,** daß an beiden einander gegenüberliegenden Seiten des Gehäuses je ein äußeres Getriebe mit Kurbel und Schwinge angordnet ist.

## Claims

1. Device for actuating a flap which can be pivoted between two end positions or a filter or headlight which can be pivoted between two end positions, in particular for an air heater or air-conditioning system, in particular of a vehicle, with a crank (4) which, with its outer end, actuates a rocker (7) which is firmly attached to a shaft (8), by means of which a flap can be actuated and with a second crank (4a) on the shaft (8) of the first crank (4), whose outer end can actuate a second flap (12), characterised in that the cranks (4, 4a) are always electric motor-driven in the same direction of rotation and that the cranks (4, 4a) and the rockers (7, 7a) are situated outside the casing (1) which holds the electric motor drive including a gear unit and that, in both end positions of the rocker (7), the crank (4) forms an angle (α) of 80 to 100 degrees, in particular 85 to 95 degrees, with the rocker (7).

2. Device according to Claim 1, characterised in that a second rocker (7a) is attached to the shaft of the second flap, the outer end of the second crank being linked directly or via a transmission component to this.

3. Device according to Claim 1 or 2, characterised in that the slider (9) in or on the first rocker is guided in a curved path.

4. Device according to Claim 2, characterised in that the slot (10) in the first rocker (7) is curved.

5. Device according to one of the above Claims 2 to 3, characterised in that the second crank (4a) forms an obtuse angle with the first crank (4).

6. Device according to one of the above Claims 2 to 4, characterised in that the first and second cranks together form a double-armed forked lever as double crank.

7. Device according to one of the above claims, characterised in that the second flap is a dynamic pressure flap.

8. Device according to one of the above claims, characterised in that the outer end of the crank (4) is attached via a slider (9) to the rocker (7) in such a manner that is can be displaced in the longitudinal direction of the rocker.

9. Device according to one of the above claims, characterised in that the pin-form slider (9) is guided in a rocker slot (10) which is provided in the longitudinal direction of the rocker.

10. Device according to one of the above claims, characterised in that the axes of rockers (7, 7a) and cranks (4, 4a) are parallel to one another.

11. Device according to one of the above claims, characterised in that the rocker (7) can be pivoted back and forth between two end positions by the crank (4), whereby in the first end position the flap is closed and in the second end position the flap is open.

12. Device according to one of the above claims, characterised in that the angular travel (β) of the rocker (7) between both end positions is 45 to 100 degrees, in particular 50 to 90 degrees.

13. Device according to one of the above claims, characterised in that the rockers (7, 7a) and the cranks (4, 4a) are linked outside on the casing.

14. Device according to one of the above claims, characterised in that the casing (1) is symmetrical with a longitudinal axis of the casing (5) which bisects the rotational axis of rocker (7) and crank (4).

15. Device according to one of the above claims, characterised in that the rocker is connected to a fresh-air flap.

16. Device according to one of the above claims, characterised in that the rocker (7) is positioned so that it can be displaced with respect to the shaft (8) of the flap, adjusting the rotation of the shaft as it slides, the shaft (8) having a slider which slides in or on the rocker (7).

17. Device according to one of the above claims, characterised in that the socket is centrally symmetrical to the axis of the casing on the side which faces away from the shaft.

18. Device according to one of the above claims, characterised in that the gear unit which is provided outside lies between device casing and the casing of the air flap.

19. Device according to one of the above claims, characterised in that an external gear unit with crank and rocker is provided on each of the two opposite sides of the casing.

## Revendications

1. Dispositif de manoeuvre d'un volet, d'un filtre ou d'un projecteur pouvant tourner entre deux positions extrêmes, en particulier pour un chauffage à air ou un système de climatisation, en particulier d'un véhicule automobile, comportant une manivelle (4) qui entraîne par son extrémité extérieure un balancier (7) qui est fixe sur un arbre (8) qui permet de manoeuvrer un volet, et une deuxième manivelle (4a) prévue sur l'arbre (8) de la première manivelle (4) et dont l'extrémité extérieure peut manoeuvrer un deuxième volet (12), caractérisé par le fait que les manivelles (4, 4a) sont entraînées toujours dans le même sens de rotation par un moteur électrique, que les manivelles (4, 4a) et les balanciers (7, 7a) sont situés à l'extérieur de la boîte (1) qui contient l'entraînement a moteur électrique, y compris des engrenages, et que dans les deux positions extrêmes du balancier (7), la manivelle (4) fait avec le balancier (7) un angle (α) de 80 à 100 degrés, en particulier de 85 à 95 degrés.

2. Dispositif selon la revendication 1, caractérisé par le fait qu'à l'arbre du deuxième volet est fixé un deuxième balancier (7a) auquel l'extrémité extérieure de la deuxième manivelle est articulée directement ou par l'intermédiaire d'un élément de transmission.

3. Dispositif selon l'une des revendications 1 et 2, caractérisé par le fait que la pièce coulissante (9) est guidée dans ou sur le premier balancier sur un chemin courbe.

4. Dispositif selon la revendication 2, caractérisé par le fait que le trou allongé (10) du premier balancier (7) est courbe.

5. Dispositif selon l'une des revendications précédentes 2 et 3, caractérisé par le fait que la deuxième manivelle (4a) fait un angle obtus avec la première manivelle (4).

6. Dispositif selon l'une des revendications précédentes 2 à 4, caractérisé par le fait que les première et deuxième manivelles forment ensemble un levier coudé à deux bras ou double manivelle.

7. Dispositif selon l'une des revendications précédentes, caractérisé par le fait que le deuxième volet est un volet de pression dynamique.

8. Dispositif selon l'une des revendications précédentes, caractérisé par le fait que l'extrémité extérieure de la manivelle (4) est fixée par une pièce coulissante (9) au balancier (7) de façon à être mobile dans la direction longitudinale de celui-ci.

9. Dispositif selon l'une des revendications précédentes, caractérisé par le fait que la pièce coulissante (9), en forme de cheville, est guidée dans un trou allongé (10) du balancier qui s'étend dans la direction longitudinale de celui-ci.

10. Dispositif selon l'une des revendications précédentes, caractérisé par le fait que les axes des balanciers (7, 7a) et des manivelles (4, 4a) sont parallèles.

11. Dispositif selon l'une des revendications précédentes, caractérisé par le fait que la manivelle (4) peut faire osciller le balancier (7) entre deux positions extrêmes, le volet étant fermé dans la première position extrême et ouvert dans la deuxième position extrême.

12. Dispositif selon l'une des revendications précédentes, caractérisé par le fait que l'angle de rotation ( ) du balancier (7) entre les deux positions extrêmes est de 45 à 100 degrés, en particulier de 50 à 90 degrés.

13. Dispositif selon l'une des revendications précédentes, caractérisé par le fait que les balanciers (7, 7a) et les manivelles (4, 4a) sont articulés à la boîte extérieurement.

14. Dispositif selon l'une des revendications précédentes, caractérisé par le fait que la boîte (1) est symétrique par rapport à un axe longitudinal (5) de celle-ci qui coupe l'axe de rotation du balancier (7) et de la manivelle (4).

15. Dispositif selon l'une des revendications précédentes, caractérisé par le fait que le balancier est joint à un volet d'air frais.

16. Dispositif selon l'une des revendications précédentes, caractérisé par le fait que le balancier (7) est monté mobile par rapport a l'arbre (8) du volet et, lors de son mouvement, fait tourner l'arbre, l'arbre (8) présentant une pièce coulissante qui coulisse dans ou sur le balancier (7).

17. Dispositif selon l'une des revendications précédentes, caractérisé par le fait que le coussinet est placé symétriquement au milieu par rapport à l'axe de la boîte sur le côté opposé à l'arbre.

18. Dispositif selon l'une des revendications précédentes, caractérisé par le fait que les engrenages placés extérieurement sont situés entre la boîte du dispositif et la boîte du volet d'air.

19. Dispositif selon l'une des revendications précédentes, caractérisé par le fait que sur chacun des deux côtés opposés de la boîte est placé un mécanisme extérieur avec manivelle et balancier.
